# EUROPÄISCHE PATENTSCHRIFT

(11) **EP 1 810 764 B1**
(45) Veröffentlichungstag und Bekanntmachung des Hinweises auf die Patenterteilung: **16.12.2009**
(21) Anmeldenummer: 07000386.8
(22) Anmeldetag: 10.01.2007
(51) Int. Cl.: B21K 1/24, B23P 15/00, B23P 13/04, F16K 27/00, F16K 11/00

(54) **Verfahren zum Herstellen von Ventilgehäusen**
Method for producing valve casings
Procédé destiné à la fabrication de boîtiers de soupape

(30) Priorität: 19.01.2006 DE 102006003259
(43) Veröffentlichungstag der Anmeldung: 25.07.2007
(73) Patentinhaber: Behr Thermot-tronik GmbH, 70806 Kornwestheim (DE)
(72) Erfinder: Willers, Eike, Dr.-Ing., 70469 Stuttgart (DE); Auweder, Andreas, 71665 Vaihingen (DE)
(74) Vertreter: Patentanwälte Ruff, Wilhelm, Beier, Dauster & Partner

(56) Entgegenhaltungen:
- US-A- 2 309 666
- US-A- 2 669 011
- US-A- 3 886 638
- US-B1- 6 253 837

## Beschreibung

Die Erfindung betrifft ein Verfahren zum Herstellen von Ventilgehäusen durch Abtrennen von Abschnitten von einem extrudierten Strangmaterial und durch Einarbeiten von im Wesentlichen in einer gemeinsamen Ebene liegenden Einlass- und Auslasskanälen und einer quer dazu verlaufenden, im Wesentlichen in der gleichen Ebene angeordneten Aufnahmebohrung für wenigstens ein Ventilelement, wobei das Stangenmaterial als ein im Wesentlichen quaderförmiger Grundkörper mit abragenden Rippen geformt wird, in denen die Einlasskanäle und Auslasskanäle beginnen.

Es ist bekannt, das Ventil entsprechend Fig. 5 und 6 der US 6253837 B1 in einem Ventilgehäuse anzuordnen, das aus einem Abschnitt eines extrudierten Stangenmaterials hergestellt worden ist. In den von dem Stangenmaterial abgetrennten Abschnitt wird eine Aufnahmebohrung eingearbeitet, die sich in Extrudierrichtung erstreckt. Quer dazu werden in den Abschnitt weitere Bohrungen eingearbeitet, die in der Aufnahmebohrung münden und die als Einlasskanäle und Auslasskanäle dienen. Das extrudierte Strangmaterial hat einen im Wesentlichen rechteckigen Grundkörper, der auf den beiden Flachseiten mit teilzylindrischen Verdickungen versehen ist, in deren Bereich die Aufnahmebohrung für das Ventilelement angebracht wird.

Es ist auch bekannt, als Stangenmaterial einen im Wesentlichen quaderförmigen Grundkörper vorzusehen, von dem Rippen abragen (US-A 2309666). Nach dem Abschneiden von einzelnen Blöcken von dem Stangenmaterial, werden in diese Blöcke die Einlasskanäle, die Auslasskanäle und die Aufnahmebohrungen für Ventilelemente eingearbeitet.

Es ist weiter bekannt (US-A 2669011), ein Stangenmaterial mit rechteckigem Querschnitt vorzusehen, das zu Blöcken zerteilt wird, die als Ventilgehäuse dienen. Die Einlasskanäle, die Auslasskanäle und eine Aufnahmebohrung für Ventilelemente werden eingearbeitet, nachdem das Stangenmaterial zerteilt worden ist.

Der Erfindung liegt die Aufgabe zugrunde, die Herstellungskosten für Ventilgehäuse der eingangs genannten Art zu verringern.

Diese Aufgabe wird dadurch gelöst, dass die Einlasskanäle und die Auslasskanäle und die Aufnahmebohrungen, die quer zur Extrudierrichtung des Profils verlaufen, für mehrere Ventilgehäuse in das Stangenmaterial eingearbeitet werden, das anschließend in einzelne Ventilgehäuse zerteilt wird.

Die Erfindung ermöglicht es, die Anzahl der Spannvorgänge wesentlich zu reduzieren, die für das Einarbeiten der Einlasskanäle, der Auslasskanäle und der Aufnahmebohrung benötigt werden. Dadurch lassen sich die Herstellungskosten reduzieren. Das ist insbesondere dann ein erheblicher Vorteil, wenn die Ventilgehäuse für Thermostatventile von Kraftfahrzeugen eingesetzt werden, da diese Thermostatventile in sehr großen Stückzahlen benötigt werden.

In Ausgestaltung der Erfindung wird vorgesehen, dass die Rippe in dem Bereich wenigstens eines Einlasskanals und / oder Auslasskanals zu einem Zapfen umgeformt wird, der mit einem Außengewinde versehen wird. Das Umformen einer Rippe, nachdem der das Ventilgehäuse bildende Abschnitt von dem Strangmaterial abgetrennt worden ist, erfordert einen relativ geringen Aufwand und ist mit relativ wenig Abfallmaterial verbunden. Es ist somit möglich, ohne größeren Aufwand einen Zapfen mit einem Außengewinde vorzusehen, der für eine Überwurfmutter zum Anbringen einer Anschlussleitung benutzt werden kann. Das ist für einige Anwendungsfälle von erheblichem Vorteil, insbesondere um auch das Ventilgehäuse und / oder Anschlussleitungen zu halten.

Weitere Merkmale und Vorteile der Erfindung ergeben sich aus der nachfolgenden Beschreibung der in der Zeichnung dargestellten Ausführungsform.
- Fig. 1: zeigt eine perspektivische Darstellung eines Strangmaterials, das Ausgangsmaterial für Ventilgehäuse ist,
- Fig. 2: einen Schnitt durch ein aus dem Strangmaterial nach Fig. 1 gebildetes Ventilgehäuse mit einem Thermostatventil und
- Fig. 3: einen Schnitt ähnlich Fig. 2 einer weiteren Ausführungsform.

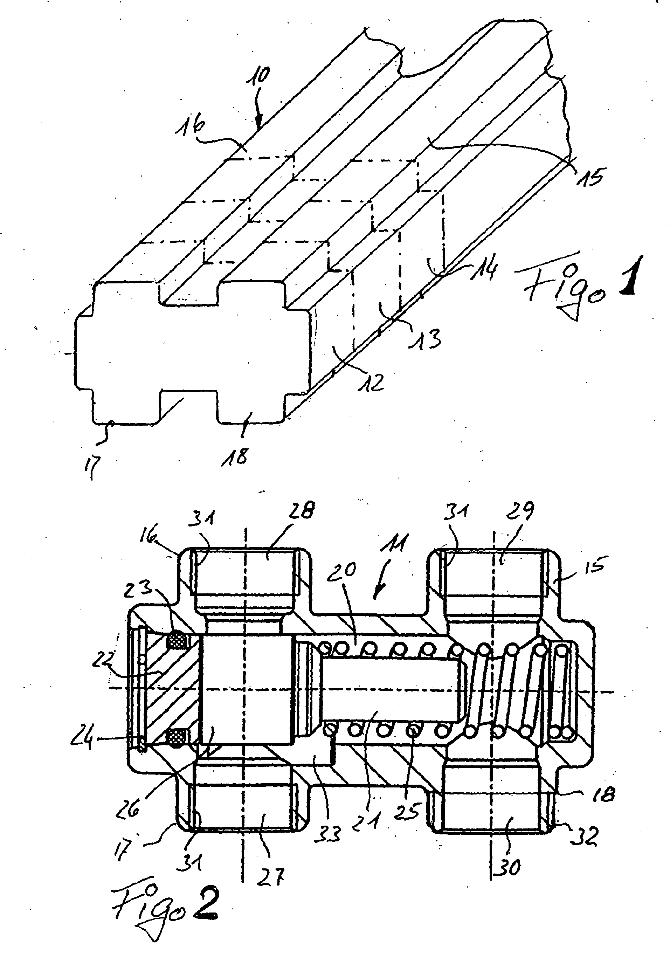

Das in Fig. 1 dargestellte Stranggussprofil oder Strangpressprofil 10 dient als Ausgangsmaterial für Ventilgehäuse 11, wie diese im Einzelnen in Fig. 2 dargestellt sind. Das Stranggussprofil oder Strangpressprofil 10, das aus einem für Stranggießen oder Strangpressen geeigneten Metall geformt wird, wird in einzelne Abschnitte 12, 13, 14 zerteilt, die jeweils als ein Ventilgehäuse dienen.

Das Profil 10 besitzt einen quaderförmigen Grundkörper, von dessen Flachseiten in Längsrichtung (Extrudierrichtung) verlaufende Rippen 15, 16, 17, 18 abragen. Das Profil 10 hat bei dem Ausführungsbeispiel einen H-förmigen Querschnitt, bei welchem die Rippen 15, 18 und 16, 17 sich paarweise gegenüber liegen. Selbstverständlich kann auch eine andere Anordnung der Rippen 15 bis 18 vorgesehen werden, insbesondere eine Anordnung bei der die Rippen sich jeweils nicht paarweise gegenüber liegen, sondern zueinander versetzt sind.

In jeden Abschnitt 12, 13, 14 des Grundkörpers ist von einer Schmalseite her eine Aufnahmebohrung 20 eingearbeitet, die quer zur Extrudierrichtung und damit auch quer zur Längsrichtung der Rippen 15 bis 18 verläuft. In der Aufnahmebohrung 20 ist bei dem Ausführungsbeispiel ein thermostatisches Arbeitselement angeordnet, das ein Gehäuse 21 enthält, das mit einem temperaturabhängig sein Volumen verändernden Dehnstoff befüllt ist. Abhängig von der Temperatur wird aus dem Gehäuse 21 ein nicht dargestellter Arbeitskolben ausgefahren, der sich gegen einen Stopfen 22 abstützt, der die Aufnahmebohrung verschließt. Der Stopfen 22 ist mit einem Dichtungsring 23 versehen. Er wird mittels eines Sicherungsringes 24 in der Aufnahmebohrung 20 gehalten. Das Gehäuse 21 des thermostatischen Arbeitselementes ist mit einer Rückstellfeder belastet, die das Gehäuse entgegen der Ausfahrrichtung des nicht sichtbaren Arbeitskolbens in Richtung zu dem Stopfen 22 belastet. Die Rückstellfeder 25 stützt sich an dem geschlossenen Ende der Aufnahmebohrung 20 des Ventilgehäuses 11 ab.

Mit dem Gehäuse 21 des thermostatischen Arbeitselementes ist ein Ventilschieberelement 26 fest verbunden, das in der Aufnahmebohrung 20 geführt ist. Das Ventilschieberelement 26 sperrt in kaltem Zustand, d.h. solange der Arbeitskolben des thermostatischen Arbeitselementes noch nicht aus dem Gehäuse 21 ausgefahren ist, die Verbindung zwischen einem Einlasskanal 27 und einem gegenüberliegenden Auslasskanal 28. Der Einlasskanal 27 beginnt in der Rippe 17. Der Auslasskanal 28 beginnt in der Rippe 16. Ein weiterer Einlasskanal 29 und ein weiterer Auslasskanal 30 beginnen in den Rippen 15 und 18. Die Einlasskanäle 27, 29, die Auslasskanäle 28, 30 und die Aufnahmebohrung 20 liegen im Wesentlichen in einer gemeinsamen Ebene, die lotrecht zu der Längsrichtung der Rippen 15, 16, 17, 18 verläuft, d.h. zur Extrudierrichtung. In den Einlasskanal 27, den Auslasskanal 28 und den Einlasskanal 29 sind jeweils Innengewinde 31 eingeschnitten. Der Auslasskanal 30 ist bei dem Ausführungsbeispiel nach Fig. 2 mit einem Außengewinde 32 versehen. Hierzu wird die Rippe 18 des betreffenden Abschnittes 12, 13, 14 des Profils 10 zunächst in einen im Wesentlichen zylindrischen Zapfen umgeformt, in den dann ein Außengewinde eingeschnitten wird. Bei der Umformung der Rippe 18 des entsprechenden Abschnittes 12, 13, 14 des Profils 10 ist das dabei abzutragende Material relativ gering, insbesondere wenn der Abschnitt der Rippe 18 eine quadratische Form besitzt. Dadurch, dass die Aufnahmebohrung 20 und auch die Einlasskanäle 27, 29 und die Auslasskanäle 28, 30 quer zu der Längsrichtung der Rippen verlaufen, d.h. quer zur Längsrichtung des Stranggussprofils oder Strangpressprofils 10, ist es möglich, die entsprechenden Bohrungen für eine Vielzahl von Ventilgehäuse in den Abschnitten 12, 13, 14 usw. des Profils 10 anzubringen, bevor das Profil 10 in die einzelnen Abschnitte 12, 13, 14 zerteilt wird. Dadurch lassen sich eine Vielzahl von Spannvorgängen vermeiden, so dass die Bearbeitungszeit deutlich verringert werden kann.

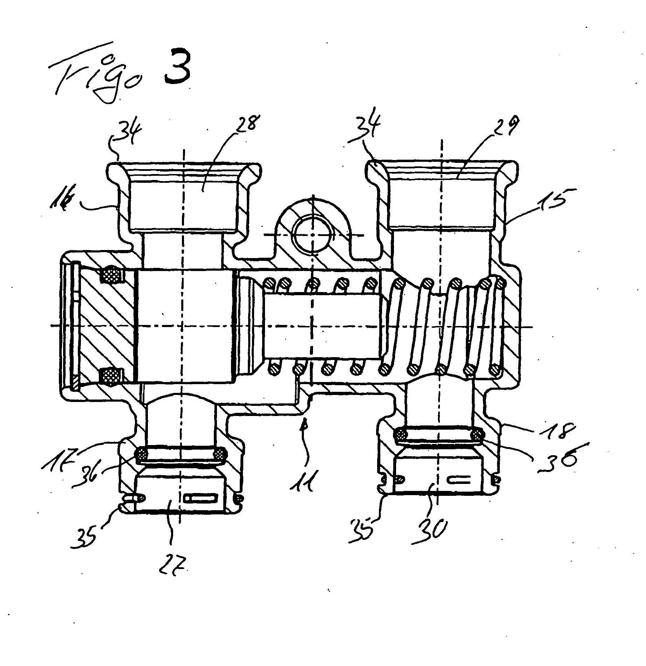

Bei dem Ausführungsbeispiel nach Fig. 3, das in seinem Grundaufbau dem Ausführungsbeispiel nach Fig. 1 und 2 entspricht, sind die Rippen 15, 16, 17, 18 auf ihrer Außenseite durch spanabhebendes Umformen, insbesondere Drehen bearbeitet. Das Ventilgehäuse 11 ist ebenfalls ein Abschnitt 12, 13, 14 eines Strangpressprofils 10, das entsprechend der Beschreibung zu Fig. 2 mit Einlasskanälen 27, 29 und Auslasskanälen 28, 30 und einer quer dazu verlaufenden Aufnahmebohrung 20 für die Ventilteile versehen ist. Die von den Rippen 15, 16 eines Abschnittes 12, 13 oder 14 gebildeten Außenkonturen sind zu Schlauchanschlüssen 34 umgeformt. Die Rippen 17, 18 sind zu Anschlusselementen 35 für Schnellkupplungen gestaltet. Sie enthalten innen einen Dichtungsring 36, insbesondere einen O-Ring sowie ein in Schlitze eingreifendes Ringfederelement 37. Beispielsweise kann eine unter der Marke Jiffy-Tite bekannte Schnellkupplung oder auch eine andere Schnellkupplung vorgesehen werden.

Die in Fig. 2 und 3 dargestellten Ventile dienen beispielsweise als Thermostatventil zwischen einem automatischen Getriebe eines Fahrzeuges und einem Ölkühler. Der Einlasskanal 27 ist mit dem Ausgang des automatischen Getriebes verbunden. Der Ausgang 28 führt zu dem Ölkühler. Der Eingang 29 kommt zurück von dem Ölkühler und führt zu dem Ausgang 30, der wieder mit dem automatischen Getriebe verbunden ist. In die Aufnahmebohrung 20 ist auf der Seite des Einlasskanals 27 eine Nut 33 eingearbeitet, über die eine Leckmenge direkt von dem Einlasskanal 27 des Getriebes als Kurzschlussströmung über den Auslasskanal 30 zurück zu dem Getriebe strömen kann. Ab einer bestimmten Temperatur, die durch Auslegung des thermostatischen Arbeitselementes wählbar ist, verschließt das Ventilschieberelement 26 den Bereich der Längsnut, so dass die gesamte Menge an Getriebeöl durch den Ölkühler hindurch zurück zu dem Getriebe strömt.

## Patentansprüche

1. Verfahren zum Herstellen von Ventilgehäusen (11) durch Abtrennen von Abschnitten (12, 13, 14) von einem extrudierten Stangenmaterial (10) und durch Einarbeiten von im Wesentlichen in einer gemeinsamen Ebene angeordneten Einlass- und Auslasskanälen (27, 28, 29, 30) und einer quer dazu verlaufenden, im Wesentlichen in der gleichen Ebene angeordneten Aufnahmebohrung (20) für wenigstens ein Ventilelement (21, 26), wobei das Stangenmaterial (10) als ein im Wesentlichen quaderförmiger Grundkörper mit abragenden Rippen (15, 16, 17, 18) geformt wird, in denen die Einlasskanäle (27, 29) und Auslasskanäle (28, 30) beginnen, **dadurch gekennzeichnet, dass** die Einlasskanäle (27, 29) und die Auslasskanäle (28, 30) und die Aufnahmebohrung (20), die quer zur Extrudierrichtung des Profils (10) verlaufen, für mehrere Ventilgehäuse (11) in das Stangenmaterial (10) eingearbeitet werden, das anschließend in einzelne Ventilgehäuse (11) unterteilt wird.

2. Verfahren nach Anspruch 1, **dadurch gekennzeichnet, dass** in die Einlasskanäle (27, 29) und / oder Auslasskanäle (28, 30) Innengewinde (31) eingeschnitten werden.

3. Verfahren nach Anspruch 1, **dadurch gekennzeichnet, dass** nach dem Unterteilen in einzelne Ventilgehäuse (11) die Rippe (18) im Bereich wenigstens eines Einlasskanals und / oder Auslasskanals (30) zu einem Zapfen umgeformt wird, der mit einem Außengewinde (32) versehen wird.

4. Verfahren nach Anspruch 1, **dadurch gekennzeichnet, dass** nach dem Unterteilen in einzelne Ventilgehäuse (11) die Rippe im Bereich wenigstens eines Einlasskanals und / oder Auslasskanals (28, 29) zu einem Schlauchanschluss (34) umgeformt wird.

5. Verfahren nach Anspruch 1, **dadurch gekennzeichnet, dass** nach dem Unterteilen in einzelne Ventilgehäuse (11) die Rippe (17, 18) wenigstens im Bereich eines Einlasskanals und / oder Auslasskanals (27, 30) zu einer Aufnahme (35) für eine Schnellkupplung umgeformt wird.

## Claims

1. Method for producing valve casings (11) by cutting off sections (12, 1, 14) from an extruded bar material (10) and by machining inlet and outlet ducts (27, 28, 29, 30) arranged substantially in a common plane and a receiving hole (20) running transversely thereto and arranged substantially in the same plane for at least one valve element (21, 26), where the bar material (10) is shaped as a substantially block-like basic element with projecting ribs (15, 16, 17, 18) inside which start the inlet ducts (27, 29) and outlet ducts (28, 30), **characterized in that** the inlet ducts (27, 29) and the outlet ducts (28, 30) and the receiving hole (20) running transversely to the extrusion direction of the profile (10) are machined into the bar material (10) for several valve casings, said bar material then being subdivided into individual valve casings (11).

2. Method according to Claim 1, **characterized in that** female threads (31) are cut into the inlet ducts (27, 29) and/or outlet ducts (28, 30).

3. Method according to Claim 1, **characterized in that** after subdivision into individual valve casings (11) the rib (18) is reshaped in the area of at least one inlet duct and/or outlet duct (30) to provide a pin that is provided with a male thread (32).

4. Method according to Claim 1, **characterized in that** after subdivision into individual valve casings (11) the rib is reshaped in the area of at least one inlet duct and/or outlet duct (28, 29) to provide a hose connection (34).

5. Method according to Claim 1, **characterized in that** after subdivision into individual valve casings (11) the rib (17, 18) is reshaped in the area of at least one inlet duct and/or outlet duct (27, 30) to provide a receptacle (35) for a quick-action coupling.

## Revendications

1. Procédé destiné à la fabrication de boîtier de soupapes (11) par découpage de sections (12, 13, 14) d'une barre extrudée (10) et par façonnage de canaux d'admission et de canaux d'évacuation (27, 28, 29, 30) disposés essentiellement sur un plan commun et d'un orifice de réception (20) pour au moins un élément de soupape (21, 26), lequel orifice est disposé essentiellement sur le même plan et s'étend transversalement aux canaux d'admission et d'évacuation, sachant que la barre (10) à la forme d'un corps de base essentiellement parallélépipédique avec des nervures saillantes (15, 16, 17, 18), dans lesquelles commencent les canaux d'admission (27, 29) et les canaux d'évacuation (28, 30), **caractérisé en ce que** les canaux d'admission (27, 29) et les canaux d'évacuation (28, 30) et l'orifice de réception (20), qui s'étendent transversalement au sens d'extrusion du profilé (10), sont façonnés pour plusieurs boîtiers de soupape (11) dans la barre (10) qui est finalement divisée en plusieurs boîtiers de soupape individuels (11).

2. Procédé selon la revendication 1, **caractérisé en ce que** des filets intérieurs (31) sont taillés dans les canaux d'admission (27, 29) et/ou les canaux d'évacuation (28, 30).

3. Procédé selon la revendication 1, **caractérisé en ce qu'**après la division en plusieurs boîtiers de soupape (11) individuels, la nervure (18) située à proximité d'au moins un canal d'admission et/ou d'un canal d'évacuation (30) est transformée en une fiche pourvue d'un filet extérieur (32).

4. Procédé selon la revendication 1, **caractérisé en ce qu'**après la division en plusieurs boîtiers de soupape (11) individuels, la nervure située à proximité d'au moins un canal d'admission et/ou d'un canal d'évacuation (28, 29) est transformée en un raccord de tuyau (34).

5. Procédé selon la revendication 1, **caractérisé en ce qu'**après la division en plusieurs boîtiers de soupape (11) individuels, la nervure (17, 18) située à proximité d'au moins un canal d'admission et/ou d'un canal d'évacuation (27, 30) est transformée en un élément de connexion (35) pour un raccord rapide.
